# EUROPÄISCHE PATENTSCHRIFT

(11) **EP 1 096 096 B1**
(45) Veröffentlichungstag und Bekanntmachung des Hinweises auf die Patenterteilung: **05.09.2007**
(21) Anmeldenummer: 00123312.1
(22) Anmeldetag: 26.10.2000
(51) Int. Cl.: E06B 3/984, E06B 3/96

(54) **Verfahren zum Montieren eines Rahmenstocks**
Method of mounting a wall element
Procédé de montage d'un élément de paroi

(30) Priorität: 26.10.1999 DE 19951485
(43) Veröffentlichungstag der Anmeldung: 02.05.2001
(73) Patentinhaber: Buchner, Karl, 84149 Velden/Vils (DE)
(72) Erfinder: Buchner, Karl, 84149 Velden/Vils (DE)
(74) Vertreter: HOFFMANN EITLE

(56) Entgegenhaltungen:
- EP-A- 0 087 848
- EP-A- 0 167 270
- DE-A- 2 412 268
- DE-C- 816 011
- NL-A- 6 614 322
- US-A- 4 265 052
- US-A- 4 457 110
- US-A- 5 737 890

## Beschreibung

### Technisches Gebiet

Die Erfindung betrifft allgemein ein Verfahren zum Montieren eines Rahmenstocks für Wandelemente. Unter Wandelement wird hauptsächlich ein Fenster oder eine Tür verstanden, die Erfindung ist aber ebenfalls auf Paneelsegmente, zusammengesetzte Fassaden oder dergleichen anwendbar.

### Stand der Technik

Beim Austausch von renovierungsbedürftigen Wandelementen ist es üblicherweise erforderlich, dass das den Blendrahmen umgebenden Mauerwerk, d.h. Mauerputz o.ä., abgeschlagen werden muss, um den neuen Rahmenstock setzen zu können. Dieses Verfahren hat den offensichtlichen Nachteil, dass abgesehen von eventuellen Beschädigungen der Außenfassade eine erhebliche Menge an Schmutz und Baustaub für den wünschenswerterweise bewohnten Raum anfällt.

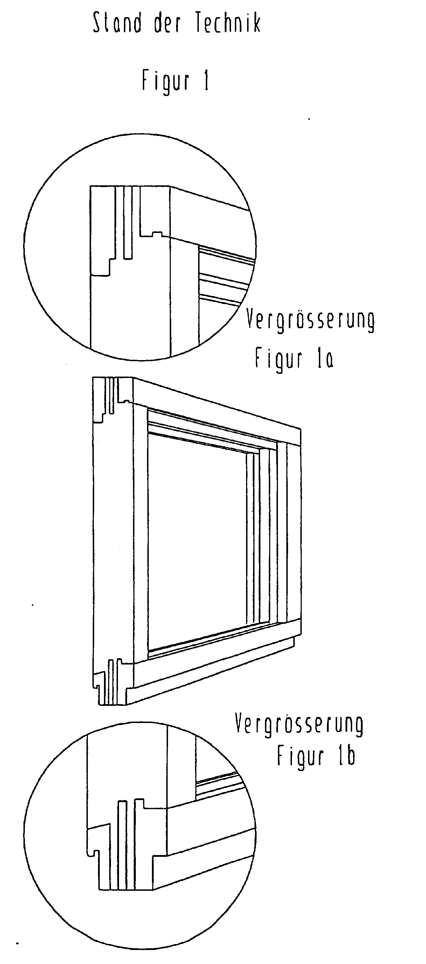

Ein etwas verbessertes Verfahren zum Austausch von renovierungsbedürftigen Grundelementen besteht darin, den alten Rahmenstock entlang des Mauerwerks heraus zu schneiden, so dass ein Rest des alten Rahmenstocks im Mauerwerk verbleibt, und dann in die dadurch entstandene Öffnung einen kleineren Rahmenstock hineinzusetzen. Dieses Verfahren hat den Nachteil, dass erstens mit einem kleineren Wandelement Vorlieb genommen werden muss, was bei Fenstern typischerweise eine Einbuße von bis zu 10% der ursprünglichen Fensterfläche und einen entsprechenden Lichtverlust ausmacht. Zweitens hat es den Nachteil, dass der in der Wand verbleibende Rest des alten Rahmenstocks noch für die weitere Verwendung voll funktionsfähig sein muss. Dies ist beim Austausch von renovierungsbedürftigen Wandelementen allerdings häufig nicht der Fall. In derartigen Fällen verwendete Rahmenstöcke können von der in Fig. 1, 1a und 1b dargestellten Art sein.

Verwandter Stand der Technik ist beispielsweise auch aus der DD 202 333 bekannt, die eine Gehrungseckverbindung für aus Profilstäben zusammengesetzte Rahmen offenbart. Die offenbarte Eckverbindung umfasst entlang einer Gehrungsschnittkante verlaufende Nuteinschnitte, in die ein Klemmteil eingeschoben wird, das die Profilstäbe zusammenzieht und in der Gehrungsebene zusammenpresst. Aufgrund der Gehrung lässt sich die Eckverbindung der DD 202 333 nicht verwenden, um vorhandene Wandelemente ohne Zerlegen der umgebenden Strukturen in gleicher Größe auszutauschen.

Aus der DE 690 192 80 T2 ist eine Vorrichtung zur Montage von Rahmen und Rahmenformen bekannt. Die Vorrichtung besteht aus einem Zwillingsmontagestück, das unter Krafteinwirkung in zwei Sackbohrungen von entsprechender Gestalt einbringbar ist. Von den Sackbohrungen befindet sich jeweils eine im Randbereich eines von zwei auf Gehrung geschnittenen Rahmenteilen.

Ferner beschreibt die NL 6614322 eine Montageanordung für eine Lichtöffnung in einer Wand, wobei ein konischer Klemmblock an einem Rahmenelement angebracht list. Der Klemmblock wird durch Verschieben eines zweiten Rahmenelements mit einer darin ausgebildeten Aussparung in Eingriff gebracht.

Des Weiteren zeigt die DE 90 12 237 U1 einen Fensterrahmen, bei dem die Schenkel an den Ecken stumpf aneinander stoßen wobei an dem Ende jeweils eines der aneinander stoßenden Schenkel ein Stab angebracht ist, der an dem Ende des jeweils anderen Schenkels angreift und durch eine Schraube an diesem Ende festlegbar ist.

### Darstellung der Erfindung

Gegenüber diesem Stand der Technik ist es Aufgabe der Erfindung, ein Verfahren zum Montieren eines Rahmenstocks anzugeben, durch das der Ersatz eines Wandelements durch ein gleich großes Wandelement vereinfacht wird.

Erfindungsgemäß wird diese Aufgabe gelöst durch ein Verfahren zum Montieren eines Rahmenstocks mit den Merkmalen von Anspruch 1.

Die vorliegende Erfindung beruht auf dem Grundgedanken, Rahmenteile eines Rahmenstocks nicht von außen zusammen zu stecken, sondern einen Rahmenstock für ein Wandelement von der Innenseite zur Außenseite des Wandelements zu montieren. Es werden Verbindungselemente zum Fixieren mehrerer Rahmenteile in ihrer Lage relativ zueinander derart bereitgestellt, dass sie keine Behinderung gegen eine Relativbewegung der Rahmenteile zu der endgültigen Form des Rahmenstocks darstellen, und zugleich die einzelnen Rahmenteile des Rahmenstocks miteinander verbinden. Im Sinne der vorliegenden Anmeldung steht der Ausdruck "Mauerwerk" beispielhaft für die den Rahmenstock in seiner üblichen Einbausituation zumindest bereichsweise umgebende Materie. Auch feste Holz- oder Stahlfassaden, Glaswände o.ä. sind daher von dem Ausdruck Mauerwerk umfasst. Die vorliegende Erfindung stellt beträchtliche Vorteile bereit. So bleibt die Fläche eines auszutauschenden Wandelements nicht nur voll erhalten, sondern kann je nach Konstruktion des neuen Rahmenstocks relativ zum alten Rahmenstock auch vergrößert werden. Der Auf- und Abbau von Außengerüsten kann entfallen, da ein Arbeiten aus dem Inneren eines Gebäudes möglich ist, und in einem typischen Anwendungsfall ist überdies ein erneutes Verputzen des Mauerwerks und ein Austausch von Tapeten oder dergleichen nicht notwendig. Der Rahmenstock und das Verfahren gemäß der vorliegenden Erfindung führen also zu beträchtlichen Einsparungen bezüglich Zeit, Arbeit und Kosten.

Vorteilhafte Weiterbildungen der vorliegenden Erfindung sind im folgenden und in den Unteransprüchen angegeben.

Es ist beispielsweise bevorzugt, dass im montierten Zustand des Rahmenstocks das oder die Verbindungselemente formschlüssig in entsprechenden Aufnahmen der durch das oder die Verbindungselemente in ihrer Lage zueinander fixierten Rahmenteile aufgenommen ist. Bei geeigneter Ausführung der Aufnahmen bietet diese Weiterbildung der Erfindung den Vorteil, dass eine Lagefixierung der Rahmenteile in den wesentlichen Richtungen automatisch bei der Montagebewegung von innen nach außen erzielt wird, ohne dass weitere Maßnahmen notwendig sind. Ergänzend kann hierbei eine kraftschlüssige Verbindung vorgesehen sein, um auch eine Lagefixierung gegen die Montagerichtung zu erzielen.

Es ist vorgesehen, dass die Aufnahmen sich im Wesentlichen rechtwinklig zur Längserstreckung des unteren bzw oberen Rahmenteils und parallel zur Längserstreckung der zwei weiteren Rahmenteile befinden, allerdings an Seiten der Rahmenteile, die im montierten Zustand des Rahmenstocks die Außenseiten des Rahmenstocks sind. Auf dieses Weise kann ein klar definierter Anschlag bei der Montage der Rahmenteile bereitgestellt werden, der von dem umgebenden Mauerwerk unabhängig ist. Ein späterer Zugang zu den Verbindungselementen und somit eine zusätzliche Befestigungsmöglichkeit wird ebenfalls bereitgestellt.

Solche zusätzlichen unterstützenden Befestigungsmöglichkeiten können über Verleimen, Verschrauben, Vernieten oder Verpressen der Verbindungselemente mit den jeweiligen Rahmenteilen, oder auch der Rahmenteile miteinander vorgesehen sein. Dies entspricht einer bevorzugten Weiterbildung der Erfindung.

Üblicherweise werden die Wandelemente, bei denen der Rahmenstock zur Anwendung kommt, rechteckig sein. Entsprechend ist vorgesehen, dass der Rahmenstock vier im montierten Zustand rechtwinklig angeordnete Rahmenteile aufweist. Eine solche Anordnung vereinfacht zudem den Montagevorgang.

Der Rahmenstock kommt mit einem einzigen Verbindungselement zum Fixieren zweier Rahmenteile aus.

Es hat sich bezüglich der Festigkeit des Rahmenstocks als besonders bevorzugt herausgestellt, Verbindungselemente mit einem schwalbenschwanzförmigen oder 8-förmigen Querschnitt zu verwenden.

Um die Abdichtung des Rahmenstocks gegenüber dem umgebenden Mauerwerk zu optimieren, und den Abdichtvorgang weitestgehend zu vereinfachen, ist erfindungsgemäß des Weiteren vorgesehen, dass der Rahmenstock in den Rahmenteilen Bohrungen und/oder Nuten zum Einbringen eines Abdichtmittels aufweist.

Das erfindungsgemäße Verfahren umfasst gemäß einer Weiterbildung, dass Schritte (d) und (e) für jedes der zwei weiteren Rahmenteile nacheinander durchgeführt werden, z.B. wenn sich aufgrund von Toleranzen in den Einbaumaßen oder Rückständen des alten Rahmenstocks samt vorher eventuell vorhandenen Abdichtmittel ein Kraftaufwand bei der Montage ergeben sollte, der das zeitgleiche Einbringen der zwei weiteren Rahmenteile zwischen das untere und das obere Rahmenteil schwierig macht.

Die Montage ist weiter vereinfacht, wenn der Kraftaufwand zum Einbringen des oder der weiteren Rahmenteile zwischen das untere und das obere Rahmenteil graduell erhöht wird, weswegen nach einer Weiterbildung des erfindungsgemäßen Verfahrens vorgesehen ist, dass die weiteren Rahmenteile im mittleren Bereich der Längserstreckung des unteren und/oder des oberen Rahmenteils eingebracht werden.

Es ist grundsätzlich möglich, nur das untere Rahmenteil fest an dem Mauerwerk zu fixieren, und nachfolgend den Rahmen in seiner Grundform zusammenzusetzen. Bevorzugt ist es, nach dem Zusammensetzen des erfindungsgemäßen Rahmenstocks zu seiner endgültigen Form auch das obere Rahmenteil und/oder die zwei weiteren Rahmenteile an dem umgebenden Mauerwerk zu fixieren, damit die Qualität der Abdichtung und der Passgenauigkeit erhöht wird.

### Kurze Beschreibung der Zeichnungen

Bevorzugte Ausführungsformen der vorliegenden Erfindung werden nachfolgend unter Bezugnahme auf die beigefügten Zeichnungen näher erläutert. In den Zeichnungen zeigt:
- Fig. 1: Einen Rahmenstock gemäß dem Stand der Technik;
- Fig. 2: einen Rahmenstock zur Verwendung mit der vorliegenden Erfindung;
- Fig. 3a-3c: Einzelheiten des Rahmenstocks gemäß der Fig. 2;
- Fig. 4: einen weiteren Rahmenstock zur Verwendung mit der vorliegenden Erfindung;
- Fig. 5: einen wiederum weiteren Rahmenstock, aus der besonders gut Einzelheiten des erfindungsgemäßen Montageverfahrens hervorgehen;
- Fig. 6, 7 und 8: weitere Ausführungsformen des Rahmenstocks;
- Fig. 9, 10 und 11: das erfindungsgemäße Montageverfahren z.B. mit dem Rahmenstock nach Fig. 2;
- Fig. 12 und 13: einen wiederum weiteren Rahmenstock im Detail.

### Ausführliche Beschreibung der bevorzugten Ausführungsformen

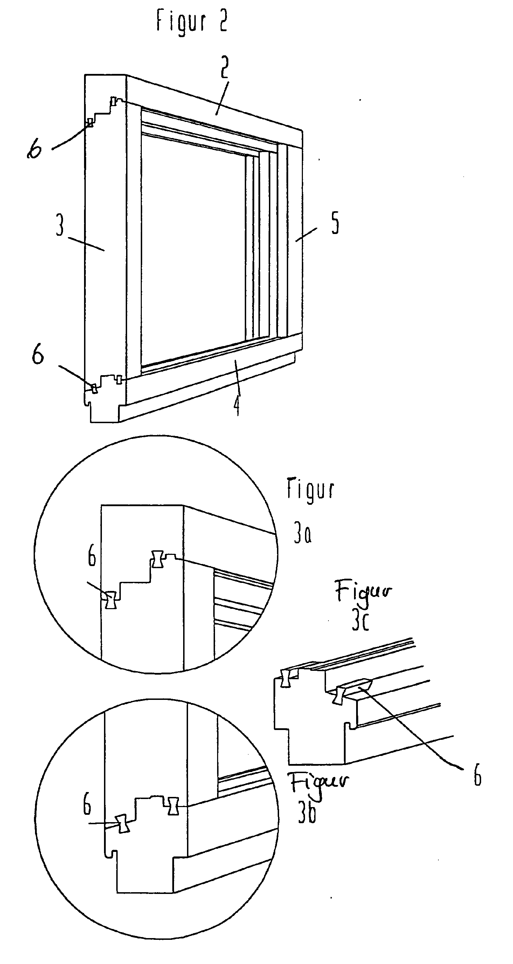

Wie aus Fig. 2 ersichtlich ist, besteht der Rahmenstock 1 aus einzelnen Rahmenteilen 2, 3, 4, 5, die üblicherweise rechtwinklig zueinander angeordnet sind. Obgleich der Rahmenstock in sämtlichen dargestellten Ausführungsbeispielen als vier Rahmenteile umfassend und von rechteckiger Grundform dargestellt ist, sind auch rechteckige Formen mit mehr als vier Rahmenteilen und andere Polygonformen denkbar, beispielsweise Sechsecke oder Achtecke.

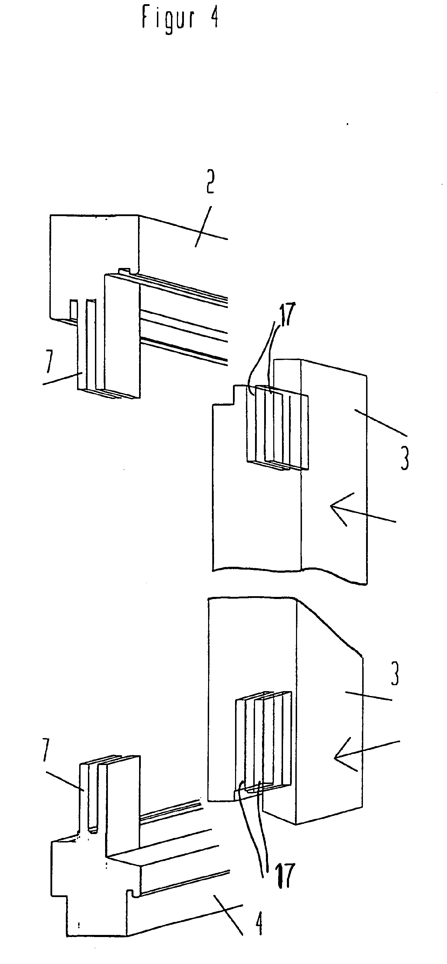

Der Rahmenstock 1 in Fig. 2 umfasst Befestigungselemente 6, die eine Lagefixierung der Rahmenteile 2, 3, 4, 5 relativ zueinander erlauben. Hierzu ist vorgesehen, dass an den oberen und unteren Rahmenteilen 2, 4, Verbindungselemente 6 von der Rahmenebene vorstehen, wie auch aus den Fig. 3a, 3b und 3c besser hervorgeht. Diese Verbindungselemente 6 können dabei einstückig mit dem Rahmenteil ausgeführt sein, was sich bei Kunststoffwandelementen besonders eignet, oder als separate Teile in entsprechende Ausnehmungen, beispielsweise gefräste Nuten eingebracht sein. Letztere Ausführungsform eignet sich besonders für Holzwandelemente, und der Formschluss durch das Einbringen der Verbindungselemente 6 in entsprechende Ausfräsungen kann durch eine Einleimung unterstützt sein.

Weitere Verbindungsarten der Rahmenteile 2, 3, 4, 5 mit den Verbindungselementen 6 ist z. B. Verschrauben, Vernieten, oder Verpressen, wie aus der nachfolgenden Beschreibung hervorgeht.

Die Verbindungselemente 6 sind in Fig. 2 in einer Querschnittform als Schwalbenschwanz dargestellt, können aber in einer Vielzahl von unterschiedlichen Formen ausgeführt sein, wobei über diese Verbindungselemente ebenfalls Anschlagflächen vorgesehen sein können, die eine Bewegung der parallelen Rahmenteile 3, 5 über das Ende der Rahmenteile 2, 4 hinaus verhindern.

Während Fig. 2 und 3a, 3b, 3c eine mehrteilige Ausführungsform von Rahmenteilen 2, 3, 4, 5 und Verbindungselemente 6 darstellen, ist in dem Ausführungsbeispiel gemäß Fig. 4 eine einstückige Ausbildung dargestellt. Bei dieser einstückigen Ausführungsform weisen die oberen und unteren Rahmenteile 2, 4 stegartige Vorsprünge 7 als Verbindungselement auf. Eine Fixierung des Rahmenteils 3 and den Rahmenteilen 2, 4 in Fig. 4 kann erzielt werden, indem das Rahmenteil 3 passgenau in die Lücke zwischen die Rahmenteile 2, 4 eingebracht und dann in Richtung der Pfeile in Fig. 4 entlang der Längserstreckung der Rahmenteile 2, 4 bewegt wird. Hierbei werden die stegartigen Verbindungselemente 7 in entsprechend geformten Aufnahmen 17 aufgenommen, wo sie über Formschluss und ggf. zusätzlich über Kraftschluss eine Lagefixierung zwischen den Rahmenteilen 2, 4 einerseits und dem Rahmenteil 3 andererseits vorsehen. Der Formschluss kann durch eine gewisses Übermaß der Verbindungselemente 7 relativ zu den Aufnahmen 17 erzielt werden, so dass über Verpressen eine sichere Verbindung bereitgestellt wird, oder gegebenenfalls durch Verleimen o.ä..

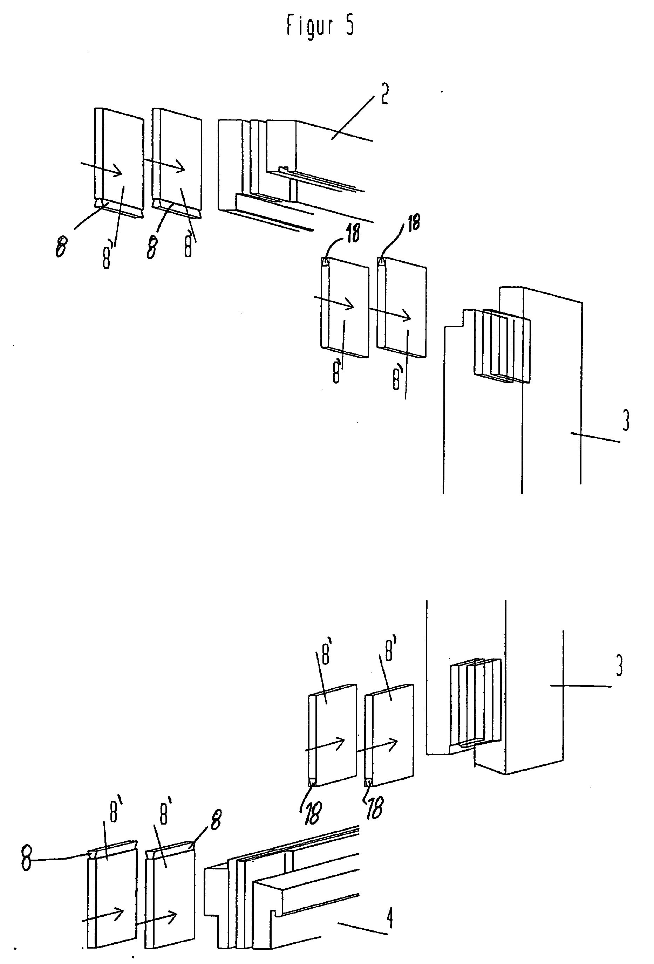

Fig. 5 zeigt ein weiteres Beispiel, bei dem sowohl die Verbindungselemente 8 der Rahmenteile 2, 4 als auch die entsprechenden Aufnahmen 18 an dem Rahmenteil 3 jeweils zweiteilig ausgeführt sind. Bei den Rahmenteilen 2, 4 werden Einschublaschen 8' in Pfeilrichtung in entsprechende Ausnehmungen an den Rahmenteilen eingebracht und dort befestigt. Entsprechend wird mit Rahmenteil 3 verfahren, in das Einschublaschen 8' mit Ausnehmungen 18 eingebracht und befestigt werden. Die weitere Vorgehensweise entspricht der Darstellung in Fig. 4.

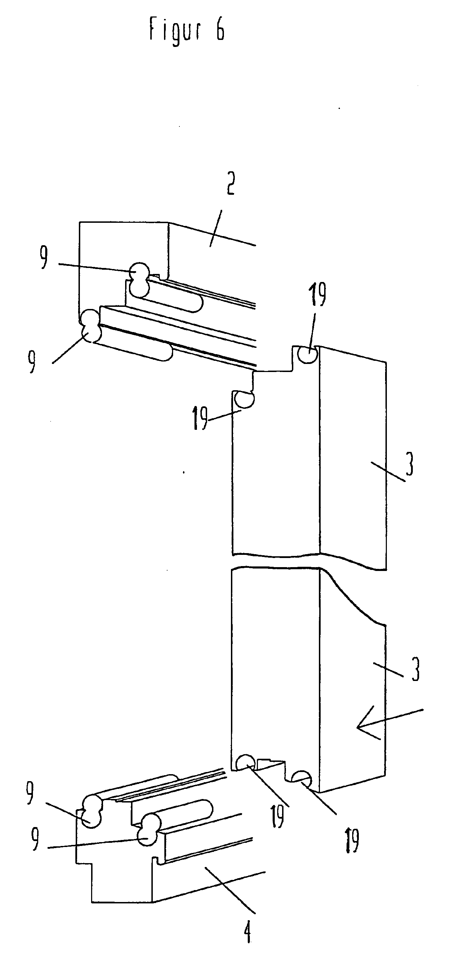

In Fig. 6 ist ein Ausführungsbeispiel dargestellt, in dem die Verbindungselemente 9 eine 8-Form aufweisen, und im Rahmenteil 3 Ausnehmungen eingearbeitet sind, die in ihrem Querschnitt einem Segment der Form "8" entsprechen.

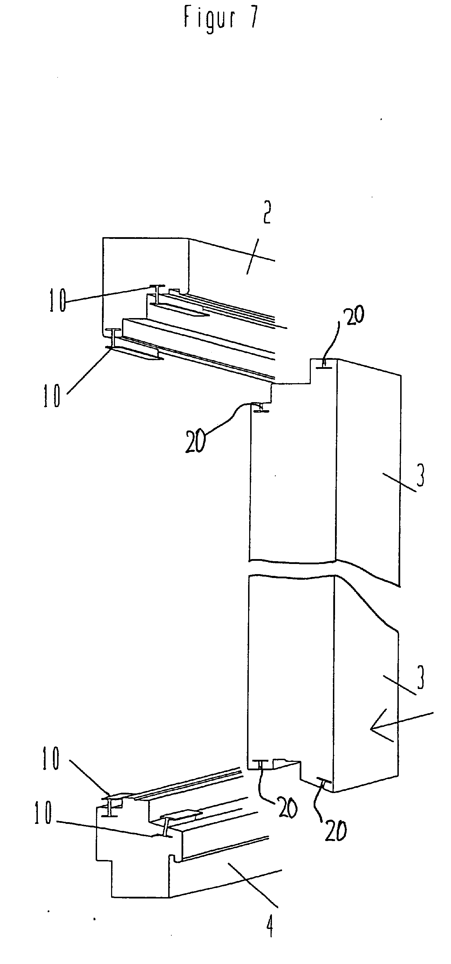

In Fig. 7 sind Verbindungselemente einer weiteren Querschnittsform dargestellt und in der Fig. mit 10 bezeichnet. Die Verbindungselemente 10 der Fig. 7 weisen im Querschnitt eine Doppel-T-Form auf, so dass sie mit dem einen Querbalken des "T" in entsprechende Ausnehmungen der Rahmenteile 2, 4 eingesetzt werden können, und mit der Hälfte des Längsbalken sowie dem zweiten Querbalken des "T" über die Rahmenebenen vorstehen. Im Rahmenteil 3 sind entsprechend T-förmige Ausnehmungen 20 vorgesehen, die zu dem über die Rahmenebene vorstehende Teil der Verbindungselemente 10 passen. Die Fixierung des Rahmenteils 3 an den Rahmenteilen 2, 4 erfolgt wie bei den vorhergehenden Ausführungsformen.

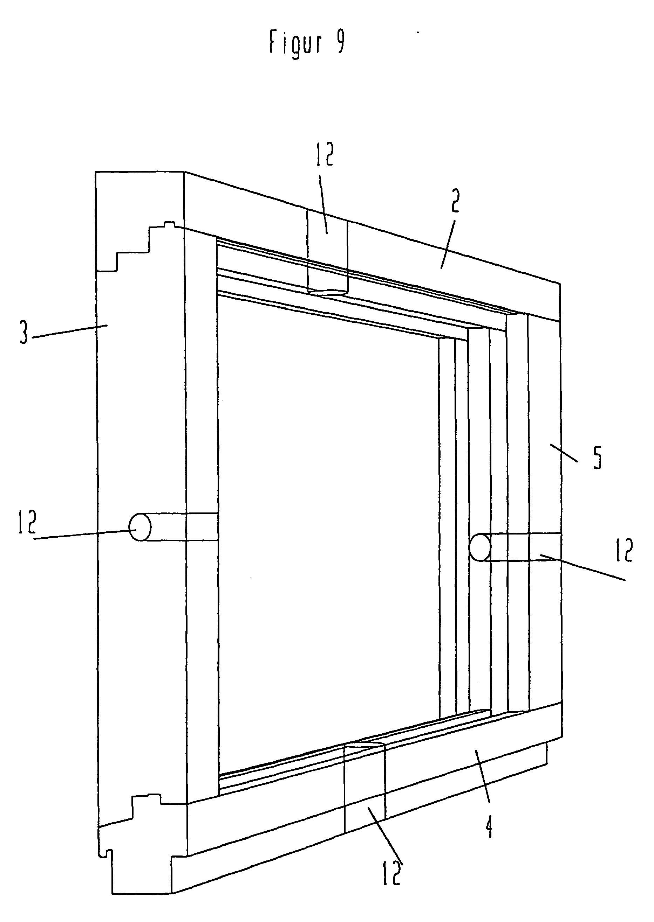

Die Länge der Befestigungselemente 7, 8, 9 (entsprechend Fig. 4, 5, 6) sowie der Befestigungselemente 10 (Fig. 9) ist typischerweise gleich oder kleiner als die Breite des Rahmenelements 3, so dass im montierten Zustand des Rahmenstocks die Befestigungselemente von der Innenseite des Rahmenstocks 1 aus einerseits nicht sichtbar sind, und andererseits keine Behinderung für die Montage eines Fensterflügels oder dergleichen darstellen.

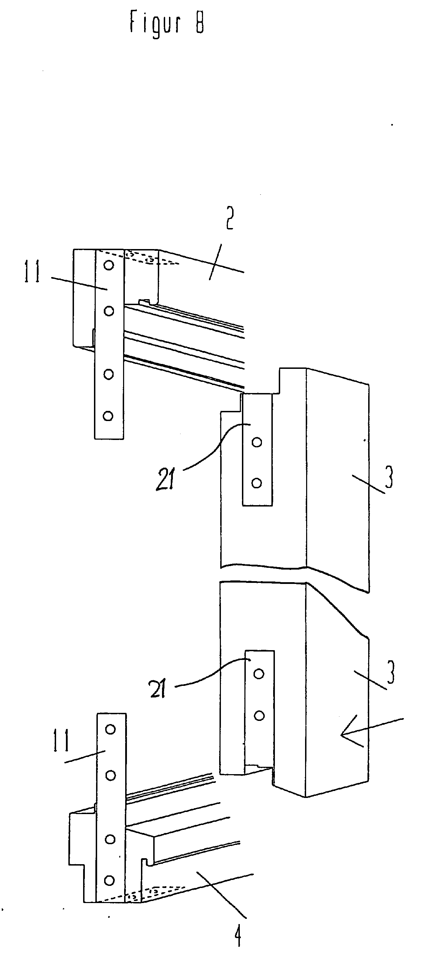

In Fig. 8 ist eine Möglichkeit der Lagefixierung von Rahmenteil 3 an den Rahmenteilen 2, 4 über L-förmige Verbindungselemente 11 dargestellt. Die Verbindungselemente 11 sind dabei im Wesentlichen derart an den Rahmenteilen 2, 4 befestigt, dass sie rechtwinklig zur Längserstreckung liegen, an der Außenseite des montierten Rahmenstocks rechtwinklig zur Längserstreckung vorstehen und einen Anschlag für das Rahmenteil 3 bilden. Das Rahmenteil 3 ist mit entsprechenden Aufnahmen 21 für diese vorstehenden Teile der Verbindungselemente 11 versehen, die parallel zur Längserstreckung des Rahmenteils 3 verlaufen.

Wie in den anderen Ausführungsformen ermöglicht die Profilform der Rahmenteile 2, 3 und 4 ein passgenaues Einsetzen und Bewegen des Rahmenteils 3 entlang der Längserstreckung der Rahmenteile 2, 4, bis die Verbindungselemente 11 in den Aufnahmen 21 zur Anlage kommen. Die Befestigung kann hierbei über Verschraubungen optimiert werden, was in Fig. 8 über entsprechende Öffnungen dargestellt ist. Die Verschraubung kann über ein Maschinengewinde in den Verbindungselementen 11 ermöglicht und von der Innenseite des Rahmenstocks aus durchgeführt werden.

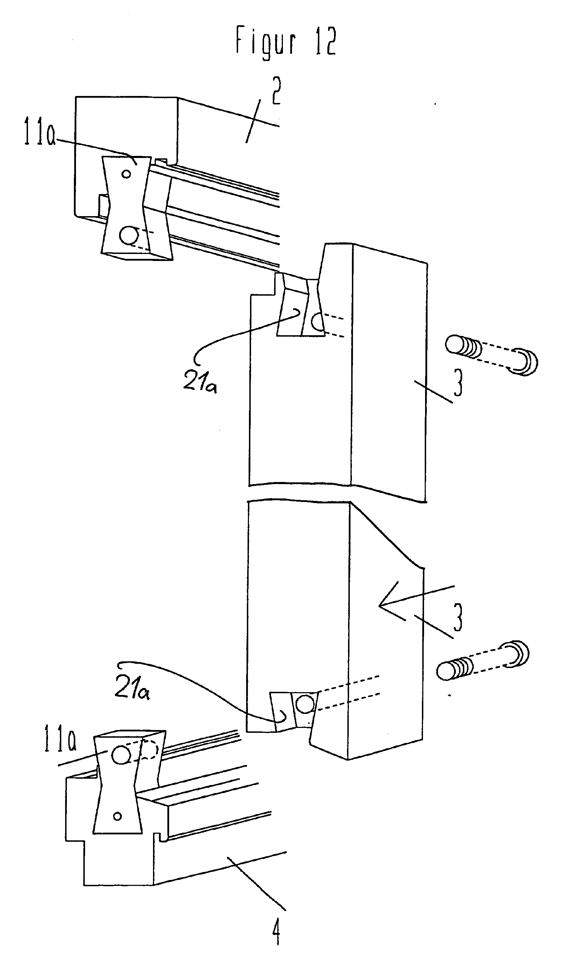

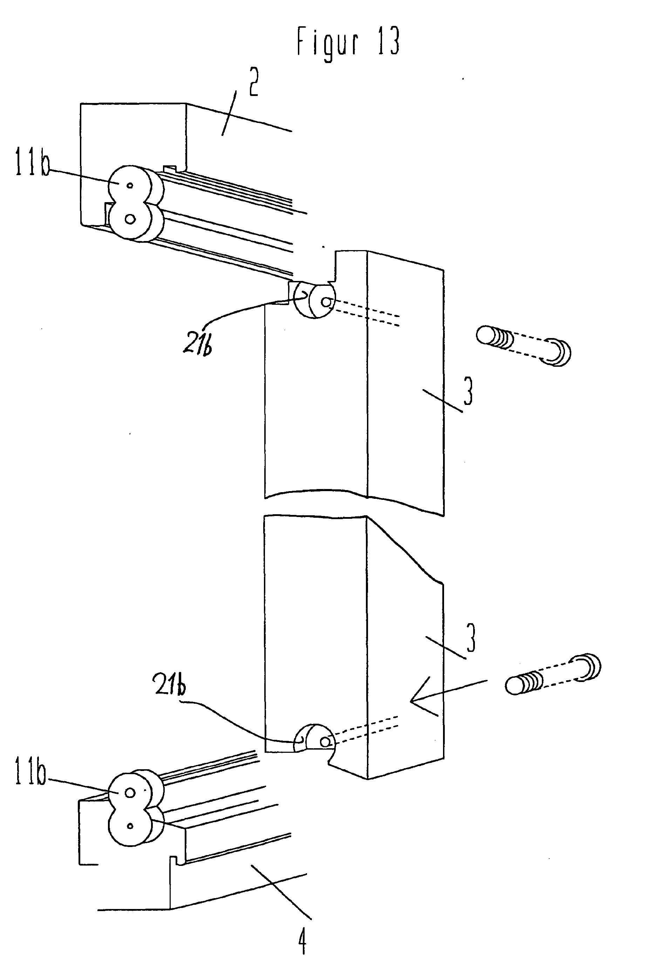

Fig. 12 und 13 zeigen entsprechend eine schwalbenschwanzförmige Ausbildung von Verbindungselementen 11a, bzw. eine 8-förmige Ausbildung von Verbindungselement 11b (Rampa-Muffe).

Die Befestigungselemente 11a, 11b sind im Wesentlichen rechtwinklig zur Längserstreckung der Rahmenteile 2, 4 über ein geeignetes Befestigungsmittel - beispielsweise eine Vernietung oder Verschraubung - an den Rahmenteilen 2, 4 befestigt. Am Rahmenteil 3 sind Ausnehmungen 21a, 21b eingearbeitet, von der Stirnseite des Rahmenteils 3 aus im Wesentlichen parallel zur Längserstreckung des Rahmenteils 3. Die Aufnahmen 21a, 21b im Rahmenteil 3 entsprechen in ihrer Querschnittsform dem vom der Rahmenebene vorstehende Teil der Verbindungselemente 11a, 11b.

Des Weiteren weisen sie von der Stirnseite des Rahmenteils 3 aus betrachtet eine Hinterschneidung auf, was auf vorteilhafte Weise sicherstellt, dass allein aufgrund des Formschlusses zwischen den Verbindungselementen 11a, 11b und den ihnen zugeordneten Aufnahmen 21a, 21b und dem entsprechenden Formschluss des in die Rahmenteile 2, 4 eingearbeiteten Teils der Verbindungselemente 11a, 11b eine Fixierung einer Lageveränderung zwischen Rahmenteilen 2, 4 und Rahmenteil 3 in Richtung der Längserstreckung des Rahmenteils 3 gesichert ist. Eine Lageveränderung entlang der Richtung der Rahmenteile 2, 4 kann entweder durch ein gewisses Übermaß und ein sich ergebendes Verpressen des von der Rahmenebene vorstehenden Teils der Verbindungselemente 11a, 11b relativ zu den ihnen zugeordneten Aufnahmen 21a, 21b erzielt werden, es ist jedoch ebenfalls möglich, zusätzliche Befestigungselemente zu verwenden, wie dies auch in den Fig. 12 und 13 dargestellt ist.

Da Maschinenschrauben im technischen Gebiet der vorliegenden Erfindung üblicherweise ohne weiteres vorhanden sind, hat sich eine handelsübliche Verschraubung als besonders geeignet herausgestellt. Zu diesem Zweck ist in den Verbindungselementen 11a, 11b ein Gewinde mit einer Tiefe vorgesehen, die einen sicheren Halt gewährleistet.

Die Fig. 9, 10 und 11 verdeutlichen das erfindungsgemäße Verfahren wie folgt.

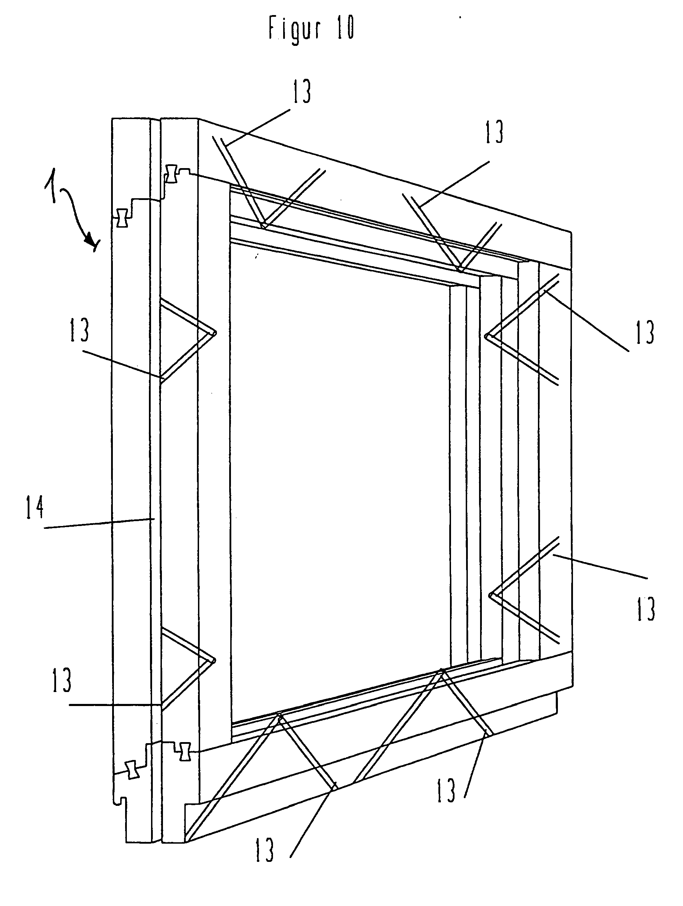

In Fig. 9 ist ein auszutauschender Rahmenstock dargestellt, bei dem lediglich zur Vereinfachung der Darstellung die Rahmenteile die gleichen Bezugszeichen tragen. Ein derartiger Rahmenstock ist üblicherweise von einem Mauerwerk umgeben, so dass die genauen Außenmaße des Rahmenstocks von Außen nicht ohne weiteres ersichtlich sind. Um diese Außenmaße festzustellen, werden zunächst Spionbohrungen 12 in den auszutauschenden Rahmenstock eingebracht, woraufhin für den neuen Rahmenstock Standardprofile auf Maß abgelängt werden können. Ebenfalls werden bevorzugt Bohrungen 13 und Nuten 14 in den neuen Rahmenstock 1 eingebracht (Fig. 10).

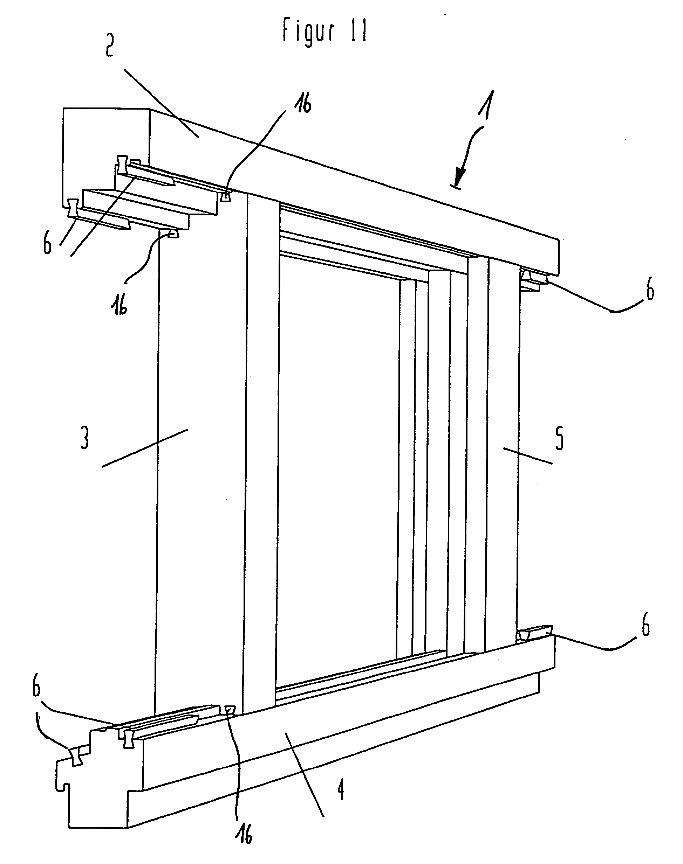

Anschließend kann dann der alte Fensterstock ohne Beschädigung des umgebenden Mauerwerks herausgenommen werden, beispielsweise durch Einschneiden und Ausbrechen. Das untere Rahmenteil 4 des neuen Rahmenstocks 1 (Fig. 11) wird in die sich somit ergebende Aussparung im Mauerwerk eingesetzt und fixiert, beispielsweise verschraubt. Danach wird das obere Rahmenteil 2 in die sich ebenfalls durch das Entfernen des alten Rahmenstocks ergebende Aussparung im Mauerwerk eingeführt, wobei es nicht vollständig am Mauerwerk fixiert wird sonder lediglich gegen Herunterfallen gesichert wird.

Schließlich werden die beiden seitlichen Rahmenteile 3, 5 im Bereich der Fenstermitte eingeführt (Fig. 11) und solange nach außen geschoben, bis die Verbindungselemente in die entsprechenden Ausnehmungen der Rahmenteile 3, 5 eingreifen und somit die einzelnen Rahmenteile 2, 3, 4, 5 zu einem kompletten Rahmenstock 1 zusammengefügt sind. In der Fig. 11 sind beispielhaft die Befestigungselemente 6 und die Aufnahmen 16 gemäß dem Ausführungsbeispiel der Fig. 2, 3a, 3b und 3c dargestellt.

Die Passflächen der Verbindungselemente können unterstützend verleimt sein - üblicherweise bei Holzrahmenstöcken, die Verbindungselement können aber auch verschraubt sein - typischerweise bei Kunststoff- oder Leichtmetallrahmenstöcken.

Hiernach werden auch die seitlichen Rahmenteile 3, 5 und das obere Rahmenteil 2 an dem Mauerwerk fixiert, d.h. fest mit ihm verbunden, beispielsweise durch Dübel oder Bauschrauben, und es wird durch die Bohrungen 13 (Fig. 10) eine geeignete Abdichtung eingebracht, beispielsweise Dichtungsschaum. Der Dichtungsschaum kann sich entlang der Nuten 14 (Fig. 10) gleichmäßig um den neu eingebrachten Rahmenstock 1 verteilen, wodurch eine optimale Abdichtung erzielbar ist.

## Patentansprüche

1. Verfahren zum Montieren eines aus mehreren Rahmenteilen aufgebauten Rahmenstocks in Mauerwerk oder dergleichen, mit folgenden Verfahrensschritten:
(a) Einbringen eines unteren Rahmenteils (4) in das und Fixieren dieses Rahmenteils an dem Mauerwerk, wobei das untere Rahmenteil mit einem Verbindungselement versehen ist;
(b) Einbringen eines oberen Rahmenteils (2) in das Mauerwerk, wobei das obere Rahmenteil im montierten Zustand des Rahmenstocks dem ersten Rahmenteil gegenüber liegt und mit einem Verbindungselement versehen ist;
(c) Sichern des oberen Rahmenteils (2) gegen Herunterfallen;
(d) Einbringen zwei weiterer Rahmenteile (3, 5) zwischen das untere (4) und das obere (2) Rahmenteil;
(e) Bewegen der weiteren Rahmenteile (3, 5) entlang der Längserstreckung des oberen (4) und/oder unteren (2) Rahmenteils, bis die Verbindungselemente vom unteren und/oder oberen Rahmenteil in Eingriff mit Aufnahmen in den weiteren Rahmenteilen (3, 5) gebracht sind.

2. Verfahren nach Anspruch 1,
**dadurch gekennzeichnet, dass**
Schritt (d) und (e) für jedes der zwei weiteren Rahmenteile (3, 5) nacheinander mehrfach durchgeführt werden.

3. Verfahren nach Anspruch 1 oder 2,
**dadurch gekennzeichnet, dass**
in Schritt (d) die zwei weiteren Rahmenteile (3, 5) zwischen das untere (4) und das obere (2) Rahmenteil im mittleren Bereich der Längserstreckung des untere und/oder des oberen Rahmenteils eingebracht werden.

4. Verfahren nach mindestens einem der Ansprüche 1 bis 3,
**dadurch gekennzeichnet, dass**
in einem Schritt
(f) das obere Rahmenteil und die zwei weiteren Rahmenteile an dem Mauerwerk fixiert werden.

5. Verfahren nach mindestens einem der Ansprüche 1 bis 4,
**dadurch gekennzeichnet, dass**
die Verbindungselemente des unteren und/oder oberen Rahmenteils mit den zwei weiteren Rahmenteilen verleimt, verschraubt, vernietet oder verpresst werden.

6. Verfahren nach mindesten einem der Ansprüche 1 bis 5,
**dadurch gekennzeichnet, dass**
in einem weiteren Schritt
(g) durch Bohrungen und/oder Nuten in zumindest einem der Rahmenteile Abdichtmittel zwischen den Rahmenstock und das Mauerwerk eingebracht wird.

7. Verfahren nach mindestens einem der Ansprüche 1 bis 6,
**dadurch gekennzeichnet, dass**
die Verbindungselemente einen schwalbenschwanzförmigen oder 8-förmigen Querschnitt aufweisen.

8. Verfahren nach mindestens einem der Ansprüche 1 bis 7,
**dadurch gekennzeichnet, dass**
die Aufnahmen (21, 21a, 21b) sich im Wesentlichen rechtwinklig zur Längserstreckung der unteren und oberen Rahmenteile (2, 4) und parallel zur Längserstreckung der zwei weiteren Rahmenteile (3, 5) befinden, an Seiten der Rahmenteile, die im montierten Zustand des Rahmenstocks (1) die Außenseiten des Rahmenstocks sind.

## Claims

1. Method for mounting a blind casing constructed from several frame portions in masonry or the like, with the following steps:
(a) introducing a lower frame portion (4) into the masonry and fixing this frame portion to the masonry, the lower frame portion being provided with a connecting element;
(b) introducing an upper frame portion (2) into the masonry, the upper frame portion being located opposite the first frame portion in the mounted state of the blind casing and being provided with a connecting element;
(c) preventing the upper frame portion (2) from dropping down;
(d) introducing two further frame portions (3, 5) between the lower (4) and upper (2) frame portions;
(e) moving the further frame portions (3, 5) along the longitudinal extent of the upper (4) and/or lower (2) frame portions until the connecting elements of the lower and/or upper frame portions are engaged with receptacles in the further frame portions (3, 5).

2. Method according to claim 1, **characterised in that** steps (d) and (e) are performed several times one after the other for each of the two further frame portions (3, 5).

3. Method according to claim 1 or 2, **characterised in that** in step (d) the two further frame portions (3, 5) are introduced between the lower (4) and upper (2) frame portions in the central region of the longitudinal extent of the lower and/or upper frame portion.

4. Method according to one or more of claims 1 to 3, **characterised in that** in a step
(f) the upper frame portion and the two further frame portions are fixed to the masonry.

5. Method according to one or more of claims 1 to 4, **characterised in that** the connecting elements of the lower and/or upper frame portions are glued, bolted, riveted or pressed to the two further frame portions.

6. Method according to one or more of claims 1 to 5, **characterised in that** in a further step
(g) through holes and/or grooves in at least one of the frame portions, sealing means are introduced between the blind casing and the masonry.

7. Method according to one or more of claims 1 to 6, **characterised in that** the connecting elements have a dovetailed or figure-of-eight cross-section.

8. Method according to one or more of claims 1 to 7, **characterised in that** the receptacles (21, 21a, 21b) are located substantially at right angles to the longitudinal extent of the lower and/or upper frame portions (2, 4) and parallel to the longitudinal extent of the two further frame portions (3, 5), on sides of the frame portions which are the outer sides of the blind casing in the mounted state of the blind casing (1).

## Revendications

1. Procédé de montage d'un élément de paroi fait de plusieurs éléments de cadre dans un ouvrage de maçonnerie ou équivalent comprenant les étapes suivantes :
a) poser un élément de cadre (4) inférieur dans l'ouvrage de maçonnerie et fixer cet élément de cadre à l'ouvrage de maçonnerie, l'élément de cadre inférieur étant muni d'un élément de liaison ;
b) poser un élément de cadre supérieur (2) dans l'ouvrage de maçonnerie, l'élément de cadre supérieur étant positionné, dans l'état monté de l'élément de paroi, à l'opposé du premier élément de cadre et étant muni d'un élément de liaison ;
c) protéger de l'élément de cadre supérieur (2) contre la chute ;
d) poser deux autres éléments de cadre (3, 5) entre l'élément de cadre inférieur (4) et l'élément de cadre supérieur (2) ;
e) déplacer autres éléments de cadre (3, 5) le long de l'étendue longitudinale de l'élément de cadre supérieur (4) et/ou de l'élément de cadre inférieur (2) jusqu'à ce que les éléments de liaison de l'élément de cadre inférieur et/ou de l'élément de cadre supérieur soient mis en prise avec des logements dans les autres éléments de cadre (3, 5).

2. Procédé selon la revendication 1, **caractérisé en ce que** des étapes (d) et (e) sont réalisées, plusieurs fois, l'une après l'autre, pour chacun des deux autres éléments de cadre (3, 5).

3. Procédé selon la revendication 1 ou 2, **caractérisé en ce que** dans l'étape (d), les deux autres éléments de cadre (3, 5) sont posés entre l'élément de cadre inférieur (4) et l'élément de cadre supérieur dans la zone médiane de l'étendue longitudinale de l'élément de cadre inférieur et/ou de l'élément de cadre supérieur.

4. Procédé selon au moins une des revendications 1 à 3, **caractérisé en ce que** dans une étape
(f) l'élément de cadre supérieur et les deux autres éléments de cadre sont fixés à l'ouvrage de maçonnerie.

5. Procédé selon au moins une des revendications 1 à 4, **caractérisé en ce que** les éléments de liaison de l'élément de cadre inférieur et/ou supérieur sont collés, vissés, rivés ou pressés avec les deux autres éléments de cadre.

6. Procédé selon au moins une des revendications 1 à 5, **caractérisé en ce que** dans une autre étape
(g) un composant pour joint est posé entre l'élément de paroi et l'ouvrage de maçonnerie par des perçages et/ou des rainures dans au moins un des éléments de cadre.

7. Procédé selon au moins une des revendications 1 à 6, **caractérisé en ce que** les éléments de liaison présentent une coupe transversale en queue d'aronde ou en forme de 8.

8. Procédé selon au moins une des revendications 1 à 7, **caractérisé en ce que** les logements (21, 21 a, 21 b) sont placés pour l'essentiel perpendiculairement à l'étendue longitudinale des éléments de cadre inférieur et supérieur (2, 4) et parallèlement à l'étendue longitudinale des deux autres éléments de cadre (3, 5), sur les côtés des éléments de cadre, qui sont, dans l'état monté de l'élément de paroi (1), les cotés extérieurs de l'élément de paroi
